# FASCICULE DE BREVET EUROPEEN

(11) **EP 1 379 353 B1**
(45) Date de publication et mention de la délivrance du brevet: **23.11.2005**
(21) Numéro de dépôt: 01984219.4
(22) Date de dépôt: 06.07.2001
(51) Int. Cl.: B23H 7/28, B23H 7/08

(54) **FIL POUR ELECTROEROSION A COUCHE SUPERFICIELLE OPTIMISEE**
DRAHTELEKTRODE MIT OPTIMIERTER OBERFLÄCHEN-SCHICHT
ELECTRIC DISCHARGE MACHINING WIRE WITH OPTIMISED SURFACE COATING

(30) Priorité: 13.07.2000 FR 0009435
(43) Date de publication de la demande: 14.01.2004
(73) Titulaire: THERMOCOMPACT, 74370 Metz Tessy (FR)
(72) Inventeur: LY, Michel, F-74000 Annecy (FR)
(74) Mandataire: Poncet, Jean-François
(86) Numéro de dépôt international: PCT/FR2001/002173
(87) Numéro de publication internationale: WO 2002/005998

(56) Documents cités:
- EP-A- 0 185 492
- EP-A- 0 521 569
- PATENT ABSTRACTS OF JAPAN vol. 012, no. 067 (M-673), 2 mars 1988 (1988-03-02) & JP 62 213924 A (FURUKAWA ELECTRIC CO LTD:THE), 19 septembre 1987 (1987-09-19)

## Description

### DOMAINE TECHNIQUE DE L'INVENTION

La présente invention concerne les fils électrodes utilisés pour l'usinage par étincelage érosif.

L'étincelage érosif permet d'usiner une pièce conductrice de l'électricité, en générant des étincelles entre la pièce à usiner et un fil conducteur de l'électricité. Le fil conducteur de l'électricité défile au voisinage de la pièce dans le sens de la longueur du fil, et il est déplacé progressivement dans le sens transversal par rapport à la pièce soit par translation du fil soit par translation de la pièce.

Les étincelles érodent progressivement la pièce et le fil. Le défilement longitudinal du fil permet de conserver en permanence un diamètre de fil suffisant pour éviter sa rupture dans la zone d'étincelage. Le déplacement relatif du fil et de la pièce dans le sens transversal permet de découper la pièce ou de traiter sa surface, le cas échéant.

Les machines pour électroérosion à fil comportent des moyens pour maintenir et tendre un tronçon de fil au voisinage de la pièce à usiner dans une zone d'étincelage emplie d'un diélectrique tel que l'eau, des moyens pour faire défiler le fil longitudinalement dans la zone d'étincelage, des moyens pour générer un courant d'étincelage entre le fil et la pièce à usiner, et des moyens pour produire un déplacement relatif du fil et de la pièce transversalement par rapport à la direction longitudinale du fil.

En général, l'usinage par électroérosion s'effectue en plusieurs étapes successives. Au cours d'une première étape, on génère dans la zone d'usinage une forte énergie d'étincelage, pour réaliser une découpe rapide de la pièce afin de lui conférer sensiblement sa dimension définitive. Au cours d'une seconde étape, on génère dans la zone d'étincelage une énergie moyenne, et on effectue une seconde passe pour corriger la géométrie de la pièce et éliminer ainsi les défauts de géométrie dus à la forte énergie d'étincelage au cours de la première étape. Une passe complémentaire à énergie moyenne peut éventuellement être nécessaire pour corriger encore la géométrie. Au cours d'une troisième étape de finition, on génère une énergie faible dans la zone d'étincelage et on effectue une passe de finition au cours de laquelle les moyens de déplacement transversal relatif du fil et de la pièce suivent la forme déjà découpée de la pièce, et l'étincelage à énergie faible corrige ainsi la rugosité de la pièce.

Il existe actuellement de nombreux types de fil pour électroérosion, qui se classent en deux familles principales.

Dans la première famille, les fils ont une structure transversale généralement homogène, constituée par exemple de cuivre, de laiton, de tungstène, ou de molybdène. L'alliage choisi doit satisfaire aux exigences de conductivité électrique, de résistance mécanique. La conductivité est nécessaire pour l'amenée de l'énergie dans la zone d'étincelage. La résistance mécanique est nécessaire pour éviter la rupture du fil dans la zone d'étincelage. Si possible, l'alliage est choisi pour que le fil ait un comportement favorable à l'érosion, c'est-à-dire pour que le fil permette de réaliser une érosion rapide. La vitesse d'érosion maximale d'un fil est la limite de vitesse au-delà de laquelle le fil casse lorsqu'on augmente l'énergie d'étincelage pour accélérer l'érosion.

Un autre paramètre important est la conformité de la pièce en terme de précision et d'état de surface de la pièce usinée.

En général, chaque structure de fil confère une vitesse d'usinage, une précision d'usinage et un état de surface.

Il est difficile de trouver un alliage permettant d'optimiser simultanément les trois paramètres de vitesse d'usinage, de précision d'usinage et d'état de surface. On a ainsi proposé des fils de laiton contenant 35 à 37 % de zinc, qui constituent un compromis économiquement acceptable, mais obtenu au prix d'une vitesse d'érosion relativement faible.

La seconde famille de fils pour électroérosion comprend les fils revêtus, c'est-à-dire constitués d'une âme métallique revêtue d'une couche superficielle généralement homogène en métal ou alliage. Lors de l'usinage par étincelage érosif par fil, l'arc électrique formé entre la surface du fil et la surface de la pièce, au travers du diélectrique tel que l'eau, n'atteint pas le centre du fil, sous peine de rupture de ce dernier. L'usure du fil se fait par son revêtement.

L'intérêt des fils revêtus est que l'on peut choisir l'âme du fil en fonction de ses propriétés électriques et mécaniques, et choisir le revêtement en fonction de ses propriétés érosives et de sa résistance de contact.

Ainsi, dans le document FR 2 418 699, on a proposé de revêtir l'âme par un alliage de zinc, de cadmium, d'étain, de plomb, de bismuth ou d'antimoine. Le document enseigne que la vitesse d'usinage est améliorée par le revêtement. Les exemples enseignent un revêtement dont l'épaisseur est d'environ 15 µm.

Il s'avère toutefois qu'un tel fil d'électroérosion ne permet pas d'obtenir une précision d'usinage satisfaisante et en même temps un état de surface satisfaisant.

Le document EP 0 185 492 décrit un fil électrode dont l'âme est recouverte d'une couche de 0,1 à 15 µm d'alliage de cuivre et de zinc diffusés à chaud contenant entre 10 % et 50 % de zinc. La fabrication est complexe et requiert plusieurs étapes. Le document ne contient aucun enseignement sur la façon d'obtenir un bon état de surface de la pièce à usiner avec le fil électrode. Et les précisions d'usinage recherchées et obtenues sont de l'ordre de 10 µm, insuffisantes selon les besoins actuels.

Le document EP 0 521 569 enseigne de réaliser un fil électrode par dépôt électrolytique sur une âme métallique, et tréfilage. Pour éviter un écaillement de la couche superficielle, on effectue un codépôt d'au moins deux métaux selon une épaisseur de 10 à 20 µm. La fabrication est complexe et requiert plusieurs étapes, dont une étape de codépôt dans laquelle il faut maîtriser les proportions des métaux. Et le document ne contient aucun enseignement sur la façon d'obtenir un bon état de surface de la pièce usinée avec le fil électrode.

Le document JP 62 213924 A décrit un fil électrode comportant une âme revêtue d'un enrobage de 0,5 à 4 µm de zinc ou d'alliage de zinc, en prévoyant nécessairement une interface lisse entre l'âme et l'enrobage afin d'obtenir un bon état de surface de la pièce à usiner. La réalisation de l'interface lisse augmente le coût de production du fil électrode.

La présente invention résulte d'une recherche visant à optimiser la structure d'un fil pour électroérosion, afin d'obtenir à la fois une grande vitesse d'érosion et une grande précision d'usinage, tout en réduisant le coût de production du fil électrode.

Pour réduire le coût de production, l'invention part de l'idée selon laquelle un fil à couche superficielle de zinc non diffusé est plus simple à réaliser industriellement. Il n'est pas besoin de contrôler et d'adapter la concentration de métaux dans le bain de zinc, et le métal se prête bien aux opérations de tréfilage et de calibrage.

Une première observation, confirmant l'enseignement du document FR 2 418 699, a été de constater qu'une augmentation d'épaisseur d'un revêtement de zinc est favorable à la vitesse d'électroérosion.

Une seconde observation étonnante a été de constater que, sur certaines machines d'usinage par électroérosion, l'obtention d'un état de surface fin nuit à la précision géométrique des pièces, pour un même fil, mais que cette précision peut être améliorée significativement par le choix judicieux de l'épaisseur du revêtement en zinc.

Ensuite, il a été constaté que l'utilisation d'un fil électrode à revêtement de zinc continu et non oxydé améliore sensiblement l'état de surface de la pièce usinée.

### EXPOSE DE L'INVENTION

Ainsi, le problème proposé par la présente invention est tout d'abord de concevoir une nouvelle structure de fil électrode pour l'usinage par étincelage érosif permettant d'optimiser les paramètres de vitesse d'usinage et de précision d'usinage, tout en réduisant le coût de production du fil électrode.

L'invention a également pour objet de proposer un procédé de fabrication économique d'un tel fil électrode, et de proposer une méthode d'usinage permettant d'optimiser les paramètres précités.

De préférence, l'invention vise également à améliorer l'état de surface de la pièce usinée.

Pour atteindre ces objets ainsi que d'autres, l'invention prévoit un fil électrode pour usinage par étincelage érosif, comprenant une âme métallique revêtue d'une couche superficielle en zinc, dans laquelle l'épaisseur de la couche superficielle en zinc est comprise entre 2 et 4 µm. La réalisation de la couche de zinc est particulièrement aisée et peu onéreuse, car il n'y a pas besoin d'en contrôler la teneur, contrairement aux fils connus réalisés par codépôt de plusieurs métaux et/ou diffusion thermique.

Selon l'invention, on désigne par "couche superficielle en zinc" une couche de zinc pur en phase hexagonale compacte ou solution solide terminale de zinc, ou en un alliage contenant au moins 90 % de zinc en poids.

On pourra avantageusement choisir et varier l'épaisseur de la couche superficielle en fonction du diamètre total du fil. Ainsi, pour un diamètre extérieur de fil de 0,25 mm à 0,30 mm environ, l'épaisseur de la couche superficielle peut avantageusement être comprise entre 3 et 4 µm. Par contre, pour un diamètre extérieur de fil qui est inférieur à 0,25 mm, l'épaisseur de la couche superficielle pourra avantageusement être comprise entre 2 et 3 µm environ.

Le choix de cette plage d'épaisseur procure l'avantage étonnant de résoudre le problème proposé par l'invention.

De préférence, la couche superficielle est continue, c'est-à-dire qu'elle ne laisse pas apparaître l'âme du fil. Cela permet d'améliorer la reproductibilité des étincelles dans la zone d'étincelage, et d'assurer une stabilité du procédé et une plus grande régularité de la surface usinée.

Afin de garantir de bons contacts électriques entre le fil électrode et la pièce, qui jouent un rôle sur la précision de la détection automatique du positionnement de la pièce à usiner par rapport à l'axe du fil dans l'étape de finition, on utilise une couche superficielle sensiblement dépourvue de zone de surface oxydée, et qui présente en conséquence un aspect métallique brillant. Cela garantit également de bons contacts électriques entre le fil électrode et le générateur de courant électrique d'étincelage. Il en résulte une amélioration de l'état de surface de la pièce.

Selon l'invention, on peut avantageusement utiliser un fil électrode ainsi défini pour un procédé d'usinage d'une pièce par électroérosion. Ce procédé comprend une étape de finition de la pièce dans laquelle le fil électrode ayant une couche superficielle d'épaisseur comprise entre 2 et 4 µm est déplacé progressivement pour suivre le contour de la pièce et pour corriger sa rugosité.

La fabrication d'un fil électrode selon l'invention peut comprendre les étapes de :
a. réaliser un revêtement provisoire d'épaisseur appropriée par dépôt électrolytique de zinc sur une ébauche d'âme métallique,
b. mettre à dimension par étirage (s) et recuit(s) successifs du fil pour l'amener au diamètre final, l'épaisseur appropriée du revêtement provisoire et le diamètre approprié de l'ébauche d'âme étant choisis de façon que, après étirage(s), le fil présente le diamètre total recherché et une épaisseur de couche superficielle définitive comprise entre 2 et 4 µm environ.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une vue schématique de face d'une machine d'électroérosion à fil ;
- la figure 2 est une vue de dessus illustrant le processus d'électroérosion sur la machine de la figure 1 ;
- la figure 3 illustre en vue de dessus la pièce usinée des figures 1 et 2 ; et
- la figure 4 est une vue schématique en perspective, à grande échelle d'un fil électrode selon un mode de réalisation de la présente invention.

### DESCRIPTION DES MODES DE REALISATION PREFERES

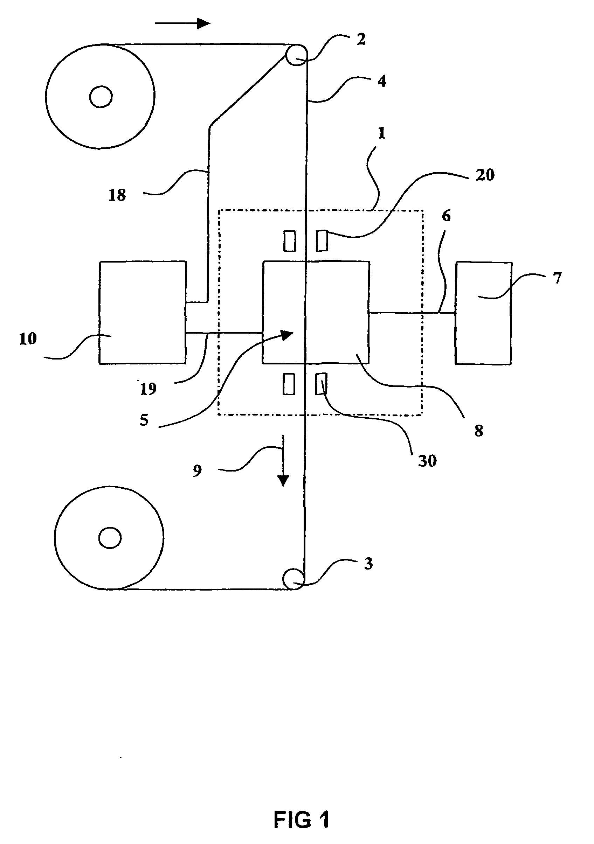

On considère tout d'abord les figures 1 à 3, qui illustrent un procédé d'usinage par étincelage érosif au moyen d'un fil. La machine d'électroérosion telle qu'illustrée sur la figure 1 comprend essentiellement une enceinte 1 d'usinage contenant un diélectrique tel que de l'eau, des moyens tels que des poulies 2 et 3 et des guides fils 20 et 30 pour tenir un fil électrode 4 et le tendre dans une zone d'étincelage 5 à l'intérieur de l'enceinte 1, un support de pièce 6 et des moyens 7 pour déplacer le support de pièce 6 par rapport au fil électrode 4 dans la zone d'étincelage 5. La pièce à usiner 8, tenue par le support de pièce 6, est placée dans la zone d'étincelage 5. Les guides fils 20, 30 sont de part et d'autre de la pièce à usiner 8, et guident le fil électrode 4 avec précision. Ils ont pour cela une position proche de la pièce à usiner 8, et leur diamètre est peu supérieur à celui du fil électrode 4, par exemple un diamètre de 254 µm pour un fil électrode 4 de 250 µm. Le fil électrode 4 défile longitudinalement comme indiqué par la flèche 9 dans la zone d'étincelage 5 au regard de la pièce à usiner 8. Un générateur électrique 10, connecté électriquement d'une part au fil électrode 4 par une ligne 18 et la poulie 2 conductrice de l'électricité, et d'autre part à la pièce à usiner 8 par une ligne 19, génère dans la zone d'étincelage 5 une énergie électrique appropriée pour faire apparaître des arcs électriques entre la pièce à usiner 8 et le fil électrode 4.

La machine comprend des moyens de commande pour adapter l'énergie électrique, la vitesse de défilement du fil électrode 4, et le déplacement de la pièce à usiner 8 en fonction des étapes d'usinage.

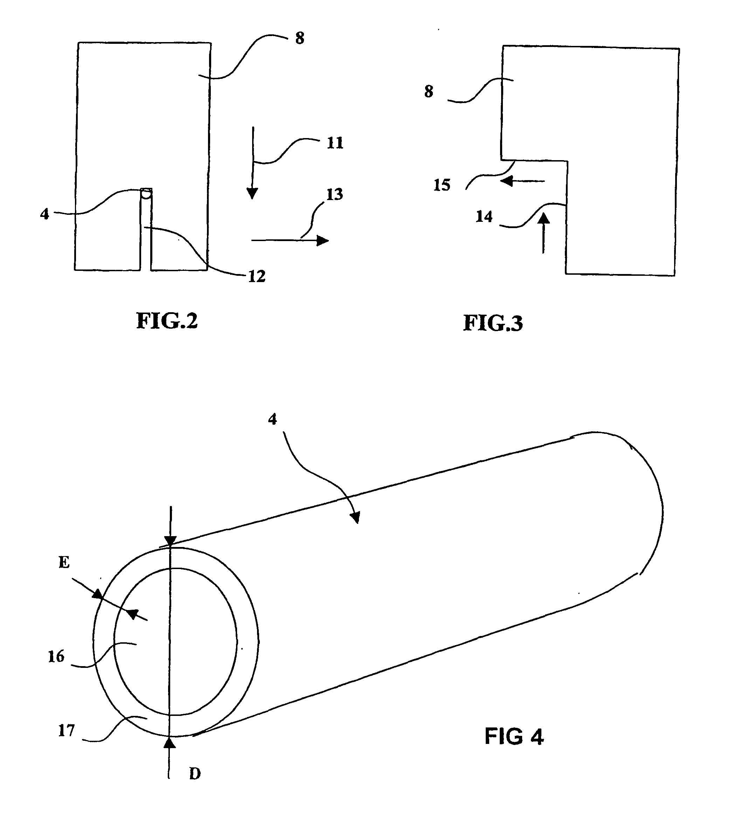

Comme on le voit sur la figure 2, par déplacement de la pièce à usiner dans une direction transversale selon la flèche 11, l'étincelage érosif produit progressivement la pénétration du fil électrode 4 dans la masse de la pièce à usiner 8 qui est conductrice de l'électricité, et produit une fente 12. Ensuite, par déplacement de la pièce à usiner 8 dans le sens de la flèche 13, on produit une découpe perpendiculaire, pour réaliser finalement une pièce telle qu'illustrée sur la figure 3, avec une première facette 14 et une seconde facette 15 usinées.

On comprend qu'une énergie électrique élevée générée par le générateur électrique 10 permet un étincelage rapide et permet donc un déplacement plus rapide de la pièce à usiner par rapport au fil électrode 4, pour un usinage rapide. Toutefois, du fait du caractère discontinu de la génération des étincelles érosives, l'augmentation de rapidité des déplacements affecte la précision géométrique de la pièce usinée, et affecte l'état de surface des facettes 14 et 15 usinées.

Selon l'invention, un meilleur compromis peut être obtenu en utilisant un fil électrode particulier, tel qu'illustré sur la figure 4 à plus grande échelle. Le fil électrode selon l'invention comprend une âme métallique 16 dont la composition est choisie en fonction des propriétés mécaniques et électriques recherchées du fil électrode 4. On pourra par exemple utiliser une âme en fer pour favoriser la résistance à la traction du fil électrode 4, une âme en nickel ou alliage de nickel, une âme en cuivre, une âme en laiton. Le choix est à la portée de l'homme du métier. L'âme métallique 16 est revêtue d'une couche superficielle 17 en zinc dont l'épaisseur E est comprise entre 2 et 4 µm. Lorsque l'épaisseur de la couche superficielle est supérieure à 4 µm environ, la précision des pièces à usiner 8 est réduite. Par exemple, pour une pièce d'acier de 50 mm de haut, une épaisseur de couche superficielle de 7 µm peut induire une erreur de cote de pièce de 4 à 6 µm environ, tandis qu'une épaisseur de couche superficielle inférieure ou égale à 4 µm conduira à une erreur éventuelle de cotes de 1 à 2 µm seulement. En-dessous de 4 µm, la précision des pièces n'est pratiquement plus affectée par l'épaisseur de la couche superficielle.

Ensuite, la vitesse d'usinage étant une fonction croissante de l'épaisseur de la couche superficielle, il n'y a pas intérêt à réduire cette épaisseur en dessous de la plage satisfaisante.

Pour cette raison, selon l'invention, on choisira avantageusement une épaisseur de couche superficielle comprise entre 2 et 4 µm.

Cette épaisseur peut être adaptée au diamètre extérieur du fil. Pour un fil dont le diamètre extérieur D est de 0,25 mm à 0,30 mm environ, l'épaisseur E de la couche superficielle 17 pourra être comprise entre 3 et 4 µm. Pour un fil dont le diamètre extérieur D est inférieur à 0,25 mm, l'épaisseur E de la couche superficielle 17 pourra être comprise entre 2 et 3 µm environ.

De préférence, comme illustré sur la figure 4, la couche superficielle 17 est continue, c'est-à-dire qu'elle ne laisse pas apparaître l'âme métallique 16 du fil selon sa surface latérale.

De préférence, la couche superficielle 17 est sensiblement dépourvue de zone de surface oxydée, et elle présente en conséquence un aspect métallique brillant.

A cet égard, il a été constaté que la présence d'irrégularités de surface du fil électrode, ou d'une couche superficielle d'oxyde, introduit une irrégularité d'étincelage, surtout lors des étapes de finition à faible puissance d'usinage. Il en résulte un état de surface de pièce usinée dont le Ra est généralement supérieur à 0,28 µm. Par contre, avec un fil non oxydé et à couche régulière de zinc, on a pu obtenir un état de surface de pièce usinée dont le Ra est inférieur à 0,18 µm, pouvant atteindre 0,14 µm en optimisant le générateur de la machine d'électroérosion.

Pour la fabrication d'un tel fil électrode selon l'invention, on peut avantageusement utiliser un procédé comprenant les étapes de :
a. réaliser un revêtement provisoire de zinc d'épaisseur appropriée par dépôt électrolytique sur une ébauche d'âme métallique de diamètre approprié ; l'épaisseur appropriée du revêtement provisoire est supérieure à l'épaisseur de la couche superficielle définitive à obtenir ; de même, le diamètre approprié de l'âme métallique est supérieur au diamètre définitif de l'âme dans le fil à obtenir ;
b. ensuite, on met à dimension le fil par étirage(s) et recuit(s) successifs, pour l'amener au diamètre final et obtenir les propriétés mécaniques souhaitées telles que charge à la rupture, allongement à la rupture, rectitude. Les recuits sont de courte durée ou réalisés sous atmosphère neutre, afin d'éviter la formation d'oxydes.

Ainsi, on choisit l'épaisseur appropriée de revêtement provisoire de façon que, après étirage(s), l'épaisseur E de couche superficielle 17 définitive soit comprise entre 2 et 4 µm environ. De même, on choisit le diamètre approprié de l'ébauche d'âme de façon que, après étirage, le diamètre de l'âme soit tel que le diamètre total D du fil soit égal au diamètre total recherché.

L'invention préconise d'utiliser un fil électrode défini ci-dessus pour usiner une pièce par électroérosion. Lors d'un tel usinage, on réalise une étape de finition de la pièce, étape au cours de laquelle le fil ayant une couche superficielle 17 d'épaisseur E comprise entre 2 et 4 µm est déplacé progressivement pour suivre le contour de la pièce et pour corriger sa rugosité. Par l'utilisation d'un fil dont la couche superficielle 17 en zinc a une épaisseur continue comprise entre 2 et 4 µm environ et sensiblement dépourvue d'oxydes, on réalise le meilleur compromis entre la vitesse d'usinage, la précision des pièces et leur état de surface.

La présente invention n'est pas limitée aux modes de réalisation qui ont été explicitement décrits, mais elle en inclut les diverses variantes et généralisations contenues dans le domaine des revendications ci-après.

## Revendications

1. Fil électrode pour usinage par étincelage érosif, comprenant une âme métallique (16) revêtue d'une couche superficielle (17) en zinc, **caractérisé en ce que** l'épaisseur (E) de la couche superficielle (17) en zinc est comprise entre 2 et 4 µm environ, et **en ce que** la couche superficielle (17) en zinc est sensiblement dépourvue de zone de surface oxydée, et présente en conséquence un aspect métallique brillant.

2. Fil électrode selon la revendication 1, **caractérisé en ce que**, pour un diamètre extérieur (D) de fil de 0,25 mm à 0,30 mm environ, l'épaisseur (E) de la couche superficielle (17) en zinc est comprise entre 3 et 4 µm.

3. Fil électrode selon la revendication 1, **caractérisé en ce que**, pour un diamètre extérieur de fil inférieur à 0,25 mm, l'épaisseur (E) de la couche superficielle (17) en zinc est comprise entre 2 et 3 µm.

4. Fil électrode selon l'une quelconque des revendications 1 à 3, **caractérisé en ce que** la couche superficielle (17) en zinc est continue, de sorte qu'elle ne laisse pas apparaître l'âme métallique (16) du fil.

5. Utilisation d'un fil électrode selon l'une quelconque des revendications 1 à 4 pour un procédé d'usinage d'une pièce (8) par électroérosion, **caractérisé en ce qu'**il comprend une étape de finition de la pièce à usiner (8) dans laquelle le fil électrode (4) ayant une couche superficielle (17) en zinc d'épaisseur (E) comprise entre 2 et 4 µm et sensiblement dépourvue de zone de surface oxydée est déplacé progressivement (11, 13) pour suivre le contour de la pièce à usiner (8) et pour corriger sa rugosité.

6. Procédé de fabrication d'un fil selon l'une quelconque des revendications 1 à 4, **caractérisé en ce qu'**il comprend les étapes de :
a. réaliser un revêtement provisoire en zinc d'épaisseur appropriée par dépôt électrolytique sur une ébauche d'âme métallique de diamètre approprié ;
b. mettre à dimension par étirage(s) et recuit(s) successifs du fil pour l'amener au diamètre final, l'épaisseur appropriée du revêtement provisoire et le diamètre approprié de l'ébauche d'âme étant choisis de façon que, après étirage(s), le fil présente le diamètre total (D) recherché et une épaisseur (E) de couche superficielle (17) en zinc définitive comprise entre 2 et 4 µm environ, les recuits étant de courte durée ou réalisés sous atmosphère neutre, afin d'éviter la formation d'oxydes.

## Patentansprüche

1. Drahtelektrode zur Bearbeitung mittels Funkenerosion mit einer metallischen Seele (16), die mit einer Beschichtung (17) aus Zink versehen ist, **dadurch gekennzeichnet,**
**daß** die Dicke (E) der Beschichtung (17) aus Zink zwischen ungefähr 2 und ungefähr 4 µm liegt und daß die Beschichtung (17) aus Zink im wesentlichen frei von einer oxydierten Oberflächenzone ist und folglich ein metallisch glänzendes Aussehen hat.

2. Drahtelektrode nach Anspruch 1, **dadurch gekennzeichnet, daß** bei einem Außendurchmesser (D) des Drahtes zwischen ungefähr 0,25 mm und 0,30 mm die Dicke (E) der Beschichtung (17) aus Zink zwischen 3 und 4 µm liegt.

3. Drahtelektrode nach Anspruch 1, **dadurch gekennzeichnet, daß** bei einem Außendurchmesser des Drahtes von weniger als 0,25 mm die Dicke (E) der Beschichtung (17) aus Zink zwischen 2 und 3 µm liegt.

4. Drahtelektrode nach irgendeinem der Ansprüche 1 bis 3, **dadurch gekennzeichnet,**
**daß** die Beschichtung (17) aus Zink durchgehend ist, derart, daß sie die metallische Seele (16) des Drahtes nicht erscheinen läßt.

5. Verwendung einer Drahtelektrode nach irgendeinem der Ansprüche 1 bis 4 bei einem Bearbeitungsverfahren eines Teiles (8) mittels Elektroerosion, **dadurch gekennzeichnet,**
**daß** es einen Schritt der Endbearbeitung des zu bearbeitenden Teiles (8) enthält, bei dem die Drahtelektrode (4), die eine Beschichtung (17) aus Zink mit einer Dicke (E) zwischen 2 und 4 µm aufweist und im wesentlichen frei von einer oxidierten Oberflächenzone ist, progressiv bewegt wird (11, 13), um der Kontur des zu bearbeitenden Teiles (8) zu folgen und um dessen Rauhigkeit zu korrigieren.

6. Verfahren zur Herstellung einer Drahtelektrode nach irgendeinem der Ansprüche 1 bis 4, **dadurch gekennzeichnet, daß** es folgende Schritte enthält:
a. Herstellung einer provisorischen Beschichtung aus Zink mit einer geeigneten Dicke mittels elektrolytischem Abscheiden auf eine blanke metallische Seele mit geeignetem Durchmesser;
b. Bringen des Drahtes auf Dimension mittels sukzessivem Drahtziehen und Glühen des Drahtes, um ihn auf endgültigen Durchmesser zu bringen, wobei die geeignete Dicke der provisorischen Beschichtung und der geeignete Durchmesser der blanken Seele derart gewählt sind, daß der Draht nach dem Ziehen den gewünschten Gesamtdurchmesser (D) und die endgültige Dicke (E) der Beschichtung (17) aus Zink ungefähr zwischen 2 und 4 µm hat, wobei das Glühen eine kurze Dauer hat oder unter neutraler Atmosphäre durchgeführt wird, um die Bildung von Oxyden zu vermeiden.

## Claims

1. Electrode wire for spark erosion machining comprising a metal core (16) coated with a surface layer (17) of zinc, **characterized in that** the thickness (E) of the surface layer (17) of zinc is from approximately 2 µm to approximately 4 µm, and **in that** the surface layer (17) of zinc is substantially free of oxidized surface areas, and consequently has a bright metallic appearance.

2. Electrode wire according to claim 1, **characterized in that**, for an outside wire diameter (D) from approximately 0,25 mm to approximately 0,30 mm, the thickness (E) of the surface layer (17) of zinc is from 3 µm to 4 µm.

3. Electrode wire according to claim 1, **characterized in that**, for an outside wire diameter less than 0,25 mm, the thickness (E) of the surface layer (17) of zinc is from 2 µm to 3 µm.

4. Electrode wire according to any of claims 1 to 3, **characterized in that** the surface layer (17) of zinc is continuous, so that it does not expose the metal core (16) of the wire.

5. Use of an electrode wire according to any of claims 1 to 4 for a method of machining a part (8) by spark erosion, which use is **characterized in that** it includes a step of finishing the part (8) to be machined in which the electrode wire (4) having a surface layer (17) of zinc having a thickness (E) from 2 µm to 4 µm and substantially free of oxidized surface areas is moved progressively (11, 13) to track the contour of the part (8) to be machined and to correct its roughness.

6. Method of manufacturing a wire according to any of claims 1 to 4, which method is **characterized in that** it includes the following steps:
a. producing a temporary coating of zinc of appropriate thickness by electrolytic deposition onto a metal core blank of appropriate diameter ; and
b. by successive drawing and annealing operations, reducing the diameter of the wire to its final value, the appropriate thickness of the temporary coating and the appropriate diameter of the core blank being chosen so that, after drawing, the wire has the required total diameter (D) and a thickness (E) of the final surface layer (17) of zinc from approximately 2 µm to approximately 4 µm, the annealing steps being of short duration or carried out in a neutral atmosphere, to prevent the formation of oxides.
